# EUROPEAN PATENT APPLICATION

(11) **EP 4 245 729 A1**
(43) Date of publication of application: **20.09.2023**
(21) Application number: 22161889.5
(22) Date of filing: 14.03.2022
(51) Int. Cl.: C02F 3/28, C02F 1/467, B01D 53/52, C02F 101/10, B01D 53/96

(54) **A METHOD FOR PURIFYING SULPHATE CONTAINING WASTEWATER AND RECOVERING SULPHUR AND HYDROGEN**

(71) Applicant: Fortum OYJ, 02150 Espoo (FI)
(72) Inventor: WILLQUIST, Karin, 02150 Espoo (FI); VON KRONHELM, Thomas, 02150 Espoo (FI); NILSSON, Charlotte, 02150 Espoo (FI)
(74) Representative: Laine IP Oy

(57) **Abstract**

The invention relates to a method for purifying sulphate containing wastewater and recovering sulphur species and hydrogen, comprising of converting sulphates of the sulphate containing wastewater to hydrogen sulphide in an anaerobic bioreactor, stripping the hydrogen sulphide into a gas phase and converting the hydrogen sulphide containing gas phase to a sulphide salt in a scrubber arrangement. Thereafter, the sulphide salt is subjected to electrolysis and hydrogen gas, hydroxide and elemental sulphur are recovered.

## Description

### FIELD OF THE INVENTION

The present invention relates to purification of sulphate containing wastewater as well as to a system for carrying out the purification method.

### BACKGROUND AND OBJECTS OF THE INVENTION

Several industries, such as pulp and paper, mining and metal-refining industries generate wastewaters that comprise, among other, sulphates. It is more and more undesirable to allow such wastewaters to be released to the nature, be it rivers, lakes or the sea. Indeed, sulphates contribute to eutrophication as well as decreased biodiversity in fresh-water bodies. Thus, also regulations concerning sulphate emissions become stricter with time.

Another problem in such industries, especially in processes requiring large amounts of water, is that there is an increasing demand to recycle the process water, instead of using fresh water.

Presently known wastewater treatments that concentrate on removal of sulphates typically use chemical precipitation. The process has however the disadvantage of creating large amounts of chemical sludge. The chemical sludge binds water, thus it is difficult to dispose of, as landfill regulations limit its disposal as landfilling material. Another possible way to treat sulphate containing wastewaters is membrane technology combined with evaporation. However, such processes have a high capital expenditure (CAPEX) cost due to the combined set up of membrane and evaporation, but the process also requires a significant amount of energy, while generating sulphate salt flakes of rather limited commercial use. In addition, most sulphate salts are highly soluble and cannot be disposed of in normal landfills.

Several wastewater treatment processes and methods exists, but there is still a need to provide specifically a process for removing sulphates in an efficient manner, as well as with low amount of waste, or even no waste (waste meaning a product that cannot be used in another process). Preferably, such process would also be cost-efficient, cost meaning costs of additives used in the process as well as the equipment and energy required. A primary aim of the present invention is thus to provide an efficient method for purifying sulphate containing wastewaters, which produces a low amount, or even no waste. Additionally, a further aim is to provide such a process, which is both energy- and cost efficient.

### SUMMARY OF THE INVENTION

The present invention relates to a method for purifying sulphate containing wastewater and recovering sulphur and hydrogen, as well as to a system for carrying out the method, as described in the independent claims.

A typical method for purifying sulphate containing wastewater and recovering sulphur and hydrogen comprises
- in an anaerobic bioreactor, converting sulphates in the sulphate containing wastewater to hydrogen sulphide, using sulphate reducing microorganisms and an electron donor, a phosphate source and a nitrogen source;
- in a stripping arrangement, stripping the hydrogen sulphide into a gas phase using an inert gas;
- in a scrubber arrangement, converting the hydrogen sulphide containing gas phase to a sulphide salt, using a hydroxide;
- subjecting the sulphide salt to electrolysis; and
- recovering hydrogen gas, hydroxide and sulphur from the electrolysis.

A typical system for carrying out the above method comprises
- an anaerobic bioreactor comprising an inlet for the wastewater, an inlet for the electron donor, an inlet for the phosphate source, an inlet for the nitrogen source, an inlet for microorganisms and an outlet for a liquid comprising hydrogen sulphide;
- a stripping arrangement comprising an inlet for the liquid comprising hydrogen sulphide, an inlet for the inert gas, an outlet for a gas mixture comprising hydrogen sulphide and the inert gas, and an outlet for treated wastewater;
- a scrubber arrangement comprising an inlet for the gas mixture comprising hydrogen sulphide and the inert gas, an inlet for the hydroxide, an outlet for a carrier gas mainly consisting of the inert gas, and an outlet for the liquid comprising sulphide salt;
- an electrolytic cell comprising an inlet for the liquid comprising sulphide salt, an outlet for sulphur, an outlet for hydroxide and an outlet for hydrogen; and
- means for recycling the hydroxide from the electrolytic cell to the scrubber arrangement.

### BRIEF DESCRIPTION OF THE DRAWING

- Figure 1: schematically illustrates a system according to an embodiment.
- Figure 2: schematically illustrates a system according to another embodiment.

### DETAILED DESCRIPTION OF THE INVENTION

The present invention relates to a method for purifying sulphate-containing wastewater and recovering sulphur and hydrogen, comprising
- in an anaerobic bioreactor, converting sulphates in the sulphate containing wastewater to hydrogen sulphide, using sulphate reducing microorganisms and an electron donor, a phosphate source and a nitrogen source;
- in a stripping arrangement, stripping the hydrogen sulphide into a gas phase using an inert gas;
- in a scrubber arrangement, converting the hydrogen sulphide containing gas phase to a sulphide salt, using a hydroxide;
- subjecting the sulphide salt to electrolysis; and
- recovering hydrogen gas, hydroxide and sulphur from the electrolysis.

The present method thus provides a process for efficiently retrieving sulphates from wastewater, while at the same time producing sulphur and hydrogen gas as well as a low amount or no waste. By wastewater, for example process waters are meant, i.e. any water that contains sulphates that cannot be recirculated to the process, or released to a recipient. A stripping arrangement may be for example one or more stripping towers, as known in the art. If for example two stripping towers are used, they are typically arranged in series. In this description, the terms "stripping tower" and "stripping arrangement" can be used interchangeable. A scrubber arrangement can also comprise one or more scrubbers, such as two scrubbers. If more than one scrubber is used, they are typically arranged in series. In this description, the terms "scrubber" and "scrubber arrangement" can be used interchangeably.

The process is, according to an embodiment and after an initial load, practically self-sufficient in hydroxide, as hydroxide is circulated in the process, i.e. the method comprises recycling the hydroxide from the electrolysis to the scrubber arrangement. This means that the process is self-supporting regarding demand of hydroxide and thereby also cost-efficient. The method can thus also be used for manufacturing for instance disodium sulphide and elemental sulphur, which can be used as raw substance in many different industrial applications. For instance, sulphur can be converted to sulphuric acid, which is often required for the processes generating the sulphate containing wastewater. The present invention thus allows reducing the amount of chemical compounds needed in such industrial processes, as it provides an efficient re-circulation of these compounds. Furthermore, only very limited amounts of waste are generated in the process. Still further, the process allows production of hydrogen gas in an energy efficient manner.

The present method is based on a biological process of reducing sulphates to sulphides, using anaerobic microorganisms. The sulphur is then created by electrolysis.

The microorganisms convert the sulphates to hydrogen sulphide, which is stripped to gas phase using an inert gas, typically nitrogen gas, in a stripping arrangement. The liquid led from the bioreactor to the stripping arrangement may comprise also other sulphide species, in addition to H₂S(aq), such as HS⁻(aq) and S²⁻(aq). The liquid, once stripped, is preferably recirculated from the stripping arrangement back to the bioreactor, that is, the stripping arrangement is placed in a recirculation loop of the bioreactor. pH is controlled in the stripping arrangement by addition of an acid.

Thereafter, the hydrogen sulphide is converted to a sulphide salt in the scrubber arrangement, using a hydroxide. The hydroxide can be for example sodium hydroxide (NaOH), potassium hydroxide (KOH) or lithium hydroxide (LiOH(H₂O)ₙ). If necessary, the scrubber arrangement consists of two scrubbers connected in series. The purpose with the first scrubber is to trap carbon dioxide. The first scrubber may in this case have an operational pH of approximately 6-9, and the first scrubber is regenerated by lowering the pH and thereafter the pH is raised to operational pH using hydroxides produced in the electrolysis. According to an embodiment, in the second scrubber (which is the main scrubber) or in some installations the only scrubber in use, hydroxide is used at a concentration of 5-20 wt-%. The pH of the second scrubber may be around 12, for example. The first scrubber in this case can be a carbonate collection reactor, into which the gas comprising sulphide and carbon dioxide is directed. The precipitation reaction forming inorganic carbon species such as CO₂ (aq), CO₃ (aq) and HCO₃ (aq), calcium carbonate and/or calcium bicarbonate or mixture thereof is carried out for a period of time, and the precipitate removed. A precipitation step may also be arranged between the scrubber arrangement and the electrolysis, wherein a precipitate of calcium carbonate and/or calcium bicarbonate is formed. The precipitate can be recovered, for example by filtration, and either used further or disposed of as landfill.

The obtained sulphide solution contains typically 2-18 wt-% of for instance disodium sulphide. This can be used as a product or oxidised through the electrolysis. In case the disodium sulphide is used in further production, for example in water treatment or as a reducing agent, it typically does not need to be further purified or concentrated, as the obtained disodium sulphide is sufficiently clean and concentrated for such further uses.

However, sulphide is a heavily reduced molecule and as such it also contains a lot of energy, which can be recovered as hydrogen using electrolysis. Therefore, the sulphide is preferably lead to electrolysis, where hydrogen and sulphur are recovered, as well as hydroxide. It is believed that more energy is recovered as hydrogen than is added as electricity into the electrolysis, the theoretical potential being four times. The electrolysis cell thus also generates hydrogen that can be converted to electricity to be used for example in the process itself or in another application.

The method further provides elemental sulphur, which can be either used as such, for example as fertilizer (i.e. as suspended sulphur) or it may be converted to sulphuric acid and used in metal refineries in the metal leaching process.

This process generates waste either if i) inherent high Ca in the process water fed to the bioreactor result since this generate a CaCO₃ precipitate, or ii) if the unrecovered sulphide in the bioprocess effluent water is removed through metal sulphide precipitation. In any case, the amount of waste is significantly less than in the methods of prior art. For example, in ettringite precipitation, 4.5 g chemical sludge (dry weight) is generated per gram sulphate removed.

Finally, minor amount of cell biomass and sulphide precipitates are generated in the bioprocess (for example, 0.1-2 kg/m³ dry weight or 0.6-1 g sludge per g sulphate removed). The quantities of biomass generated are approximately 10-50% less in the present process than in a sulphate reduction bioprocess where the generated sulphide species are oxidised to elemental sulphur using an additional bioreactor of aerobic sulphide oxidation microorganisms. The oxidative biological step will generate additional sludge (for example approximately 0.6 g COD/gS). The overall operational cost is also decreased since the amount of input chemicals such as the hydroxide is significantly decreased.

The anaerobic bioreactor is preferably a carrier-based solid bed reactor, comprising a suitable carrier for biofilm formation, having a high area/volume, such as 750-900 m²/m³ of the carrier. For example, it is possible to use carriers such as K5 carriers (from Veolia), AA64 carriers (from Ingenjörsfirma Anders Löfqvist), and any type of pumice stones.

The phosphate and nitrogen in the bioreactor are required as inorganic nutrients for the sulphate reducing bacteria (SRB) of the bioreactor. The phosphate source and the nitrogen source can be one compound or they can be different compounds. Also a mixture of various sources can be used. They can be fed for example in the form of diammonium phosphate. It is also possible to use different sources of phosphate and nitrogen, such as urea, ammonium phosphate and calcium phosphate or NPK fertilizer (i.e. Yara). The consumption of phosphate and nitrogen is dependent on the bacteria used, as well as on other process conditions and the nature of the wastewater purified. Trace amounts of minerals and salts such as potassium, iron, Zn, Mn, Mg etc are generally present in the waste water but can be added separately if deficient.

According to an embodiment, the stripping arrangement is operated at essentially the same temperature as the bioreactor. It is also possible to arrange a heat exchanger between the bioreactor and the stripping arrangement. Both the stripping and scrubber arrangements are preferably operated in continuous mode. The scrubber arrangement is preferably operated in same temperature as the bioreactor. The required liquid resident time of the scrubber can be for example 2-10 h and the volume may be 100 folds smaller than the bioreactor. The required residence time of the electrolysis is typically 20-60 minutes and thereby the volume of the electrolysis cell can be 1000 folds smaller than the bioreactor.

The electrolysis cell can be operated at both batch and continuous mode with or without membranes. In the electrolysis cell, the sulphide solution is oxidised at the anode to form elemental sulphur. The hydrogen production at the cathode (made for example of titanium or platinum) uses the electrons from sulphide oxidation as well as electricity. The generation is very energy efficient, using 5-20 kWh/kg of hydrogen. The electrolysis also increases the concentration of hydroxide. The liquid phase thus contains recovered hydroxide that can be recycled into the scrubber arrangement and thereby reduce or even completely remove the need for external addition of hydroxide, after the initial loading.

According to an embodiment, the electron donor is selected from a group consisting of methanol, ethanol, formate, acetate, lactate and mixtures thereof. Other suitable compounds can also be used. According to an embodiment, the concentration of the electron donor is 0.68-1.5 g / g SO₄²⁻. The concentration can be for example from 0.68, 0.8, 0.9, 1, 1.1, 1.2 or 1.3 g/g SO₄²⁻ up to 0.8, 0.9, 1, 1.1, 1.2 or 1.3 g/ g SO₄²⁻.

According to an embodiment, the pH within the bioreactor is 4.0-9.0. Typically, once the bioreactor has been in use for a certain period of time, the pH is in a range of 6.3-8.3. The pH can be for example from 4.0, 4.5, 5.0, 5.5, 6.0, 6.3, 7.0 or 7.5 up to 5.0, 5.5, 6.0, 6.3, 7.0, 7.5, 8.0, 8.3, 8.5 or 9.0. The pH may be adjusted for example using hydrochloric acid (HCI), sulphuric acid (H₂SO₄) or sodium hydroxide (NaOH). These can be used for example in a concentration of 5 wt-%. pH may for example need to be reduced to increase the efficiency of stripping, while pH may need to be increased when starting the reaction.

According to another embodiment, the temperature within the bioreactor is 2-35 °C. One suitable range for the temperature of the bioreactor is 5-15 °C. The temperature can be for example from 2, 3, 4, 5, 6, 8, 10, 12, 15, 18, 20, 22 or 25 °C up to 4, 5, 6, 8, 10, 12, 15, 18, 20, 22, 25, 27, 28, 29, 30, 31, 32, 33, 34 or 35 °C.

The sulphate reducing microorganism may be selected from a group consisting of species of the genera Desulfovibrio, Desulfotomaculum, Desulfomonas, Thermodesulfobacterium, Desulfobulbus, Desulfobacter, Desulfococcus, Desulfonema, Desulfosarcina, Desulfobacterium, Desulforomas, and mixtures thereof.

The sulphate reducing microorganisms may be used together with other naturally occurring anaerobic bacteria belonging to the genera of Acidimicrobiales, Acidithiobacillales, Betaproteobacteriales, Bacteriodales, Clostridiales, Campylobacteriales, Desulfovibrionales, Enterobacteriales, Gammaproteobacteriales, Pseudomonadales, Methylococcales, and mixtures thereof. Typically, the bioreactor is filled with a starting culture, an inoculum of microorganisms that has been selected through natural selection.

The inoculum develops in a bioreactor to different process waters, pH and temperature during a period of for example 18 months prior to use, and its composition and the relative amounts of the different microorganisms changes over time. The sulphate reducing microbial culture may contain also other naturally occurring anaerobic microorganisms, microorganisms that can tolerate small quantities of oxygen and possibly also aerobic microorganisms.

The method may also comprise a further step, namely subjecting the effluent of the stripping arrangement to polishing to obtain clean water. The polishing may be carried out by any method known as such. For example, it may be carried out by increasing the pH and adding iron chloride, to remove the residual dissolved sulphides. Further, the effluent water may be treated by commercially available filter techniques, such as carbon filters, or ultra-filtration to remove any residual phosphates or dissolved organic compounds (DOC). These processes allow cleaning the effluent water to standards which allow either re-use of the water as process water or dispensing the water to nature. In the event very pure water has to be produced, polishing of water can be done using membrane systems. The bioprocess itself has a stabilizing effect on the water quality in regard of fouling and scaling properties (e.g. iron, manganese, calcium, phosphate and organics immobilized by the microorganisms).

According to an embodiment, the sulphate content of the sulphate containing wastewater is at least 100 mg/l. The sulphate content can be even 100-10000 mg/l. The concentration is reduced in the bioreactor, typically down to 11-1000 mg/l. The rate of reduction of the sulphate concentration can be for example 40-250 mg/l/h. The reaction time of the wastewater to be treated in the anaerobic bioreactor is thus typically from five to twenty six hours.

According to an example of a wastewater, it comprises the components listed in Table 1. It is however important to note that depending on the wastewater to be treated, the components and their amounts differ.

**Table 1**

| Component | Levels in a sample wastewater 1 (mg/l) | The required levels for microorganisms (mg/l) |
|---|---|---|
| SO₄²⁻ sulphate | 1000-2000 | 100 |
| Fe²⁻ iron | 0.1 | 0.3 |
| Zn zinc | 0.4 | < 0.4 |
| Ni nickel | 1 | < 1 |
| Mg magnesium | 350 | 6 |
| Mn manganese | < 1 | < 1 |
| K potassium | 26 | < 26 |
| Cu Copper | 2.7 | <2 |

In this case (Table 1), a small amount of Fe²⁻ needs to be added to the bioreactor. The other required components are present in this exemplary wastewater sample.

Some components are used in artificial growth medium for use for the present type of microorganisms, but they might not be required in the present method. It is believed that most components are naturally present in the wastewaters in sufficient amounts.

Table 2 illustrates some possible amounts of sources of nitrogen and phosphorus that can be added to the process. Again, their amounts depend on the wastewater to be treated.

**Table 2**

| Salt | Amount salt (mg/l) | Amount element (P or N) mg/l |
|---|---|---|
| Ammonium phosphate | 37 | 10 mg/l nitrogen and 24 mg/l phosphorus |
| Urea | 14 | 6.5 mg/l nitrogen |
| Total nitrogen | | 17 mg/l nitrogen |
| Total phosphorous | | 24 mg/l phosphorus |

The amount of nitrogen in Table 2 may for example in some instances be reduced to 7 mg/l, depending on the wastewater to be treated. The same applies to phosphorus, which may be used for example in an amount of 9 mg/l.

The present invention also relates to a system for carrying out the above method, the system comprising
- an anaerobic bioreactor comprising an inlet for the wastewater, an inlet for the electron donor, an inlet for the phosphate source, an inlet for the nitrogen source, an inlet for microorganisms and an outlet for a liquid comprising hydrogen sulphide;
- a stripping arrangement comprising an inlet for the liquid comprising hydrogen sulphide, an inlet for the inert gas, an outlet for a gas mixture comprising hydrogen sulphide and the inert gas, and an outlet for treated wastewater;
- a scrubber arrangement comprising an inlet for the gas mixture comprising hydrogen sulphide and the inert gas, an inlet for the hydroxide, an outlet for a carrier gas mainly consisting of the inert gas, and an outlet for the liquid comprising sulphide salt;
- an electrolytic cell comprising an inlet for the liquid comprising sulphide salt, an outlet for sulphur, an outlet for hydroxide and an outlet for hydrogen; and
- means for recycling the hydroxide from the electrolytic cell to the scrubber arrangement.

According to an embodiment, the system comprises a single anaerobic bioreactor. The system may also comprise two anaerobic bioreactors arranged in series. The number of bioreactors depends on the desired concentration of the outgoing effluent, and it is possible to use any required number of bioreactors needed.

The system also naturally comprises all the required connections between the various parts, as well as required valves etc. The different parts will also have any other equipment required, such as means for controlling the temperature and pH of the bioreactor, as well as any further inlets and/or outlets as needed. For example, the bioreactor may comprise an inlet for feeding a pH-adjusting agent. The system also comprises any required safety arrangements, such as means for releasing pressure, sensors for controlling the process etc. It is also to be understood that any inlet and outlet in the system may be used for more than one product, depending in which form the products needed are fed or removed from the system. Further, it is to be understood that for example the inlet for the microorganisms may be the opening of the bioreactor, as the microorganisms may be fed to the bioreactor in the beginning, and no further microorganisms are required unless the process is completely stopped.

According to an embodiment, the stripping arrangement comprises an outlet for treated wastewater, connected to a polishing station for purifying the treated wastewater. The stripping arrangement may alternatively or additionally comprise means for recycling the inert gas.

The various embodiments and details described above in connection with the method apply *mutatis mutandis* to the system.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Furthermore, the described features, structures, or characteristics may be combined in any suitable manner in one or more embodiments. In the description, numerous specific details are provided, such as examples of lengths, widths, shapes, etc., to provide a thorough understanding of embodiments of the invention.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

### DETAILED DESCRIPTION OF THE DRAWING

The present system is illustrated in more detail in the enclosed drawing, where like or similar reference numbers have been used for like or similar parts of the system. In the drawing, a same reference number is used for a given inlet or outlet and any piping or similar connected to it, for sake of clarity of the drawing.

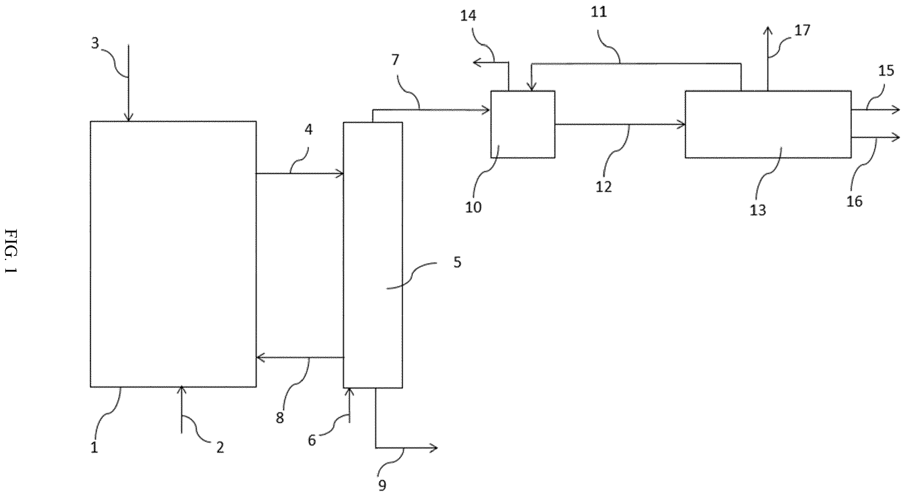

Figure 1 schematically illustrates a system according to an embodiment. The system comprises an upflow anaerobic bioreactor 1 comprising of carrier and a biofilm comprising a culture of naturally existing microorganisms (fed to the bioreactor via an opening not illustrated in the drawing). The bioreactor 1 comprises a pipe and an inlet 2 for the wastewater, a pipe and an inlet 3 for the electron donor, phosphate and nitrogen, and an outlet and pipe 4 for the liquid comprising the sulphide species (H₂S(aq), HS⁻(aq) and S²⁻(aq)), obtained from the anaerobic microbial conversion of sulphate contained in the wastewater.

The system also comprises a stripping arrangement 5 comprising an inlet for the liquid comprising the sulphide species (connected to the pipe 4) as well as a pipe and an inlet 6 for the inert gas. The stripping arrangement 5 also comprises an outlet and pipe 7 for a gas comprising hydrogen sulphide, carbon dioxide and the inert gas as well as a pipe and an outlet 8 for the liquid recycled back to the bioreactor which connects the stripping arrangement 5 with the bioreactor 1. The treated liquid is recovered from the stripping tower through a pipe 9.

The system still further comprises a scrubber 10 comprising an inlet for the gas comprising hydrogen sulphide (connected to the pipe 7), an inlet and pipe 11 for the hydroxide, and an outlet and pipe 12 for the liquid comprising sulphide. Both the pipe 11 and the pipe 12 are connected to an electrolytic cell 13 via outlet for hydroxide and an inlet for the liquid comprising sulphide. The scrubber 10 also comprises an outlet and pipe 14 of excess inert gas to balance the pressure of the system.

The electrolytic cell 13 also comprises an outlet 15 for sulphur and an outlet 16 for hydrogen, as well as is connected to electrical mains (not shown). The means for recycling the hydroxide from the electrolytic cell to the scrubber is thus the pipe 11, connecting the two parts of the system. The cell also comprises of a pipe 17 to recover excess hydroxide.

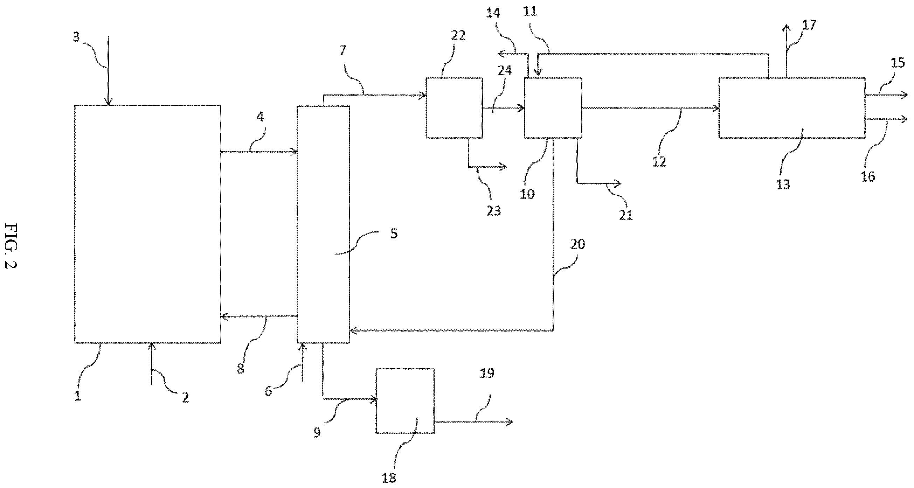

Figure 2 schematically illustrates a system according to another embodiment. In this embodiment, in addition to the parts disclosed in Figure 1, the outlet 9 for treated wastewater of the stripping arrangement is connected to a polishing station 18 for purifying the treated wastewater. Purified water is thus dispensed via an outlet and pipe 19 of the polishing station. The stripping arrangement 5 of this embodiment comprises means for recycling the inert gas, as an arrangement of pipes 20, connecting the scrubber 10 with the stripping arrangement 5. The scrubber 10 comprises an outlet 21 for the sulphide, in case it is to be used as such and not converted to hydrogen and sulphur.

The system of Figure 2 also comprises a carbonate collection reactor 22, into which the gas comprising sulphide and carbon dioxide is directed, via pipe 7, for carrying out the precipitation step. The precipitation reaction forming inorganic carbon species (CO₂(aq), CO₃(aq) and HCO₃(aq), calcium carbonate and/or calcium bicarbonate or mixture thereof) is carried out for a period of time, and the precipitate removed via outlet and pipe 23. The sulphide continues to the scrubber 10, via outlet and pipe 24.

### EXPERIMENTAL PART

An upflow anaerobic bioreactor (576 L) with 91 % active volume and a 73 % liquid volume was used, filled with AA64 carriers (Ingenjorsfirma Anders Löfqvist; 980m²/m³) actively occupying 14 % of the active volume of the bioreactor. The bioreactor was filled with inoculum from Research Institute of Sweden (RISE) strain collection that has been selected through natural selection and developed in the bioreactor to different process waters, pH and temperature during a period of 18 months prior to the experiment described below. The starting culture consisted a microbiome of sulphate reducing microorganisms that are naturally occurring in nature, from the taxonomic orders of Acidimicrobiales, Acidithiobacillales, Betaproteobacteriales, Bacteriodales, Clostridiales, Campylobacteriales, Desulfovibrionales, Enterobacteriales, Gammaproteobacteriales, Pseudomonadales, Methylococcales.

In one experiment, wastewater comprising 0.23 wt-% of SO₄, i.e. 2.3 kg of SO₄²⁻/ m³ was fed to a fixed bed bioreactor, along with 0.62 kg/m³ of methanol and 41 g/m³ of diammonium phosphate and 14 g/m³ urea. pH of the reactor was 8.2 and its temperature 10 °C.

The continuous process had a hydrolytic retention time of 27 hours. The bioreactor was stripped with nitrogen, 0.32 L of nitrogen per L of liquid volume per h. The effluent liquid was continuously led to a stripping tower in which the hydrogen sulphide was stripped into a gas phase using 4 L of nitrogen per L of liquid volume per h. The effluent gas, comprising hydrogen sulphide (0.3 vol-%) and carbon dioxide (0.3 vol-%) was then led to a scrubber, where the hydrogen sulphide containing gas phase was converted to disodium sulphide (Na₂S: 17.3 ± 1.3 kg/m³ or the corresponding sulphide concentration S²⁻: 7.1 ± 0.5 kg/m³), using sodium hydroxide. The scrubber was operating in a continuous mode at a rate of 4 kg/m³/h, where the hydraulic retention time was 8h. pH was kept stable at 13.3 ± 0.06. The feeding liquid resembled that coming out of the electrolysis cell with a sulphide concertation of 3 kg/m³ and with a concentration of sodium hydroxide of 100 kg/m³.

The liquid comprising disodium sulphide (19 kg/m³) and disodium carbonate (8 kg/m³) was then led to an electrolysis cell, where the anode was made of titan and the cathode of titan. The residence time in the electrolysis cell was 50 minutes and the sulphide oxidation yield was 53 %. Electricity with a potential of (3.5 V) was led to the electrolysis and elemental sulphur was recovered by scraping the anode. Hydrogen gas, at a yield of 1.67 kWh H₂/kg sulphide was recovered at the cathode. Effluent water contained 3 kg/m³ sulphide, approximately 100 kg/m³ sodium hydroxide and a pH of 13.5.

Effluent water from the stripping tower comprised of 670 g/m³ of SO₄²⁻, 12 g/m³ of NH₄, 31 g/m³ of PO₄³⁻, and 2 kg/m³ of sludge. The sludge comprised cell biomass (approximately 0.6 kg/m³) and inorganic sludge (approximately 1.3 kg/m³).

## Claims

1. A method for purifying sulphate containing wastewater and recovering sulphur and hydrogen, comprising
- in an anaerobic bioreactor, converting sulphates in the sulphate containing wastewater to hydrogen sulphide, using sulphate reducing microorganisms and an electron donor, a phosphate source and a nitrogen source;
- in a stripping arrangement, stripping the hydrogen sulphide into a gas phase using an inert gas;
- in a scrubber arrangement, converting the hydrogen sulphide containing gas phase to a sulphide salt, using a hydroxide;
- subjecting the sulphide salt to electrolysis; and
- recovering hydrogen gas, hydroxide and sulphur from the electrolysis.

2. The method according to claim 1, wherein the electron donor is selected form a group consisting of methanol, ethanol, formate, acetate, lactate and mixtures thereof.

3. The method according to claim 1 or 2, further comprising recycling the hydroxide from the electrolysis to the scrubber arrangement.

4. The method according to any one of the preceding claims, wherein the pH within the bioreactor is 4.0-9.0.

5. The method according to any one of the preceding claims, wherein the temperature within the bioreactor is 2-35 °C.

6. The method according to any one of the preceding claims, wherein the sulphate reducing microorganism is selected from a group consisting of species of the genera Desulfovibrio, Desulfotomaculum, Desulfomonas, Thermodesulfobacterium, Desulfobulbus, Desulfobacter, Desulfococcus, Desulfonema, Desulfosarcina, Desulfobacterium, Desulforomas, and mixtures thereof.

7. The method according to claim 6, wherein the microorganisms further comprise at least one of anaerobic bacteria belonging to the genera of Acidimicrobiales, Acidithiobacillales, Betaproteobacteriales, Bacteriodales, Clostridiales, Campylobacteriales, Desulfovibrionales, Enterobacteriales, Gammaproteobacteriales, Pseudomonadales, and Methylococcales.

8. The method according to any one of the preceding claims, further comprising a precipitation step between the scrubber arrangement and the electrolysis, wherein a precipitate of calcium carbonate and/or calcium bicarbonate is formed.

9. The method according to any one of the preceding claims, further comprising isolating carbon dioxide from hydrogen sulphide in the scrubber arrangement prior to converting the hydrogen sulphide containing gas phase to the sulphide salt.

10. The method according to any one of the preceding claims, further comprising subjecting an effluent of the stripping arrangement to polishing to obtain clean water.

11. The method according to any one of the preceding claims, wherein the sulphate content of the sulphate containing wastewater is at least 100 mg/l.

12. A system for carrying out the method of claim 1, comprising
- an anaerobic bioreactor comprising an inlet for the wastewater, an inlet for the electron donor, an inlet for the phosphate source, an inlet for the nitrogen source, an inlet for microorganisms and an outlet for a liquid comprising hydrogen sulphide;
- a stripping arrangement comprising an inlet for the liquid comprising hydrogen sulphide, an inlet for the inert gas, an outlet for a gas mixture comprising hydrogen sulphide and the inert gas, and an outlet for treated wastewater;
- a scrubber arrangement comprising an inlet for the gas mixture comprising hydrogen sulphide and the inert gas, an inlet for the hydroxide, an outlet for a carrier gas mainly consisting of the inert gas, and an outlet for the liquid comprising sulphide salt;
- an electrolytic cell comprising an inlet for the liquid comprising sulphide salt, an outlet for sulphur, an outlet for hydroxide and an outlet for hydrogen; and
- means for recycling the hydroxide from the electrolytic cell to the scrubber arrangement.

13. The system according to claim 12, wherein the system comprises a single anaerobic bioreactor.

14. The system according to claim 12 or 13, wherein the stripping arrangement comprises an outlet for treated wastewater, connected to a polishing station for purifying the treated wastewater.

15. The system according to any one of the claims 12-14, wherein the stripping arrangement comprises means for recycling the inert gas.
